(19) **Europäisches Patentamt European Patent Office Office européen des brevets**

(11) **EP 3 780 951 B1**

(12) **FASCICULE DE BREVET EUROPEEN**

(45) Date de publication et mention de la délivrance du brevet:
**07.06.2023 Bulletin 2023/23**

(21) Numéro de dépôt: **19716944.4**

(22) Date de dépôt: **16.04.2019**

(51) Classification Internationale des Brevets (IPC):
**A01K 5/01** *(2006.01)*        **A01K 1/03** *(2006.01)*

(52) Classification Coopérative des Brevets (CPC):
**A01K 5/0135; A01K 1/031; A01K 5/0142**

(86) Numéro de dépôt international:
**PCT/EP2019/059814**

(87) Numéro de publication internationale:
**WO 2019/201927 (24.10.2019 Gazette 2019/43)**

(54) **DISPOSITIF DE SUIVI DE LA CONSOMMATION D'ALIMENTS PAR UN ANIMAL TEL QU'UN MAMMIFÈRE, PAR EXEMPLE UN CHAT**

VORRICHTUNG ZUM VERFOLGEN DER FUTTERAUFNAHME EINES TIERES WIE EIN SÄUGETIER, ZUM BEISPIEL EINE KATZE

APPARATUS FOR MONITORING THE FEED CONSUMPTION OF AN ANIMAL SUCH AS A MAMMAL, FOR EXAMPLE A CAT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2018 FR 1853299**

(43) Date de publication de la demande:
**24.02.2021 Bulletin 2021/08**

(73) Titulaire: **Spécialités Pet Food**
**56250 Elven (FR)**

(72) Inventeurs:
• **BECQUES, Aurélie**
**56400 PLUNERET (FR)**
• **MEHINAGIC, Emira**
**56450 THEIX (FR)**
• **LE TOUX, Marie**
**56390 LOCMARIA GRAND CHAMP (FR)**

(74) Mandataire: **Regimbeau**
**20, rue de Chazelles**
**75847 Paris Cedex 17 (FR)**

(56) Documents cités:
| | |
|---|---|
| WO-A1-2012/046124 | WO-A1-2013/182624 |
| WO-A1-2017/214698 | WO-A1-2018/058232 |
| WO-A2-2006/096509 | US-A- 5 163 380 |

## Description

### DOMAINE DE L'INVENTION

La présente invention concerne un dispositif de suivi de la consommation d'aliments par un animal, de préférence un mammifère domestique, de préférence chat ou chien, de préférence chat.

### ETAT DE LA TECHNIQUE

Il existe de nombreux dispositifs visant à suivre la consommation d'aliments (nourriture ou eau) par un animal. De tels dispositifs comprennent conventionnellement un récipient pour aliments et une balance pour peser le récipient et son éventuel contenu. Il est possible d'estimer une quantité d'aliment ingérée par un animal sur la base d'une différence entre deux poids mesurés par une telle balance à des instants différents.

Toutefois, ces dispositifs ont pour la plupart comme inconvénient de ne pas permettre le suivi de consommation d'aliments par un unique individu. En effet, plusieurs individus peuvent simultanément prélever de la nourriture ou de l'eau se trouvant dans le récipient en se plaçant autour de celui-ci, si bien qu'il n'est pas possible d'estimer précisément la quantité d'aliment ingérée par chacun de ces individus.

Pour résoudre ce problème, il a été proposé des dispositifs comprenant un boîtier définissant une chambre dans laquelle le récipient et la balance sont agencés. Le boîtier permet de restreindre l'accès à la chambre, donc de favoriser un prélèvement d'aliment dans le récipient par un seul animal à la fois.

Toutefois, des dispositifs comportant de tels boîtiers présentent l'inconvénient suivant : un animal ayant pénétré dans la chambre et prélevant de la nourriture ou de l'eau dans le récipient agencé dans la chambre peut projeter des morceaux de nourriture ou des gouttes d'eau dans la chambre à l'extérieur du récipient par des mouvements intempestifs, si bien que ces morceaux ou gouttes ne sont ni pesés par la balance ni ingérés par l'animal. Il en résulte un biais dans l'estimation de quantité d'aliments ingéré par l'animal.

De telles projections sont particulièrement susceptibles de survenir dans le cas où le récipient contient de l'eau. En effet, certains animaux tels que le chat ont pour réflexe naturel de donner des coups de patte dans de l'eau stagnante, provoquant de telles projections.

On connaît par ailleurs du document WO 2017/214698 un dispositif de suivi de la consommation d'aliments définissant une chambre dans laquelle un récipient est placé. Le récipient est monté à rotation par rapport à la paroi arrière de la chambre. Un animal peut prélever des aliments dans ce récipient. Ce dispositif comprend par ailleurs un système de pesée situé à l'extérieur de la chambre à laquelle l'animal a accès. Ce système de pesée est configuré pour peser, avant un repas de l'animal, une quantité d'aliments qui sera ensuite transvasée dans le récipient. Ce système est également configuré pour peser, après le repas de l'animal, les restes d'aliments non consommés par l'animal. Pour réaliser cette deuxième pesée, le récipient est tourné à 180 degrés, le faisant ainsi passer derrière la paroi arrière 132 de la chambre. Le récipient quitte donc alors la chambre et pénètre dans une autre chambre dans laquelle se trouve le système de pesée. Toutefois, le dispositif du document WO 2017/214698 présente l'inconvénient de ne pas permettre la mise en oeuvre de pesée durant le repas de l'animal. Avec un tel dispositif, il n'est donc pas possible de suivre précisément la cinétique de consommation de l'animal au cours d'un repas.

D'autres dispositifs de suivi de la consommation d'aliments sont décrits dans les documents WO2013182624 et WO2012046124.

### EXPOSE DE L'INVENTION

Un but poursuivi par la présente invention est d'estimer plus précisément une quantité individuelle d'aliments consommée par un animal tel qu'un mammifère.

Ce but est atteint par un dispositif de suivi de la consommation d'aliments par un animal tel qu'un mammifère, par exemple un chat, le dispositif comprenant :

- une paroi avant, une paroi arrière et deux parois latérales définissant entre elles une chambre, et une fenêtre formée dans la paroi avant pour permettre à un animal d'accéder à la chambre depuis l'extérieur du dispositif de suivi,
- un récipient agencé dans la chambre entre les parois, le récipient définissant une cavité pour stocker des aliments destinés à être prélevés par l'animal,
- un élément de récupération d'aliments agencé dans la chambre entre la cavité du récipient et l'une des parois pour récupérer des aliments sortis de la cavité et non consommés par l'animal, dans lequel l'élément de récupération d'aliments s'étend sensiblement depuis la cavité du récipient jusqu'à une des parois,
- un système de pesée configuré pour déterminer un poids d'aliments qui ont été prélevés dans la cavité et qui n'ont pas été récupérés par l'élément de récupération du dispositif de suivi au cours d'une période de temps, le système de pesée comprenant une balance agencée dans la chambre et configurée pour acquérir des mesures indicatives du poids cumulé du récipient définissant la cavité et d'aliments contenus dans la cavité.

Dans le présent texte, on considère que le terme « aliment » couvre aussi bien de la nourriture solide que de la nourriture liquide (notamment de l'eau ou toute autre boisson).

Par ailleurs, dans le présent texte, on considère qu'un élément de récupération s'étend depuis la cavité du récipient « jusqu'à » une paroi de référence lorsque la distance maximale entre l'élément de récupération et la paroi de référence est inférieure à 5 % de la distance totale séparant la paroi de référence de la paroi opposée à la paroi de référence par rapport à la chambre. Dans le cas où la paroi de référence est une des parois latérales, la paroi qui lui est opposée est l'autre paroi latérale ; dans le cas où la paroi de référence est la paroi avant, la paroi qui lui est opposée est la paroi arrière.

Le ou chaque élément de récupération a pour effet de pouvoir récupérer des aliments prélevés par un animal dans le récipient mais tombant de sa gueule vers l'une des parois, lesdits aliments récupérés étant pesés par le système de pesée. Par ailleurs, les parois ont pour effet de restreindre l'accès au récipient et à son contenu, et donc de favoriser un prélèvement d'aliment dans le récipient par un seul animal à la fois, mais a également pour effet de constituer des barrières naturelles retenant les projections d'aliments hors du récipient par l'animal ayant accédé à la chambre. Ainsi, même des aliments projetés avec force sur les parois latérales peuvent rebondir et être récupérés par un élément de récupération, ce qui ne pourrait pas arriver si le dispositif était dépourvu de telles parois.

Ainsi, tout aliment qui n'a pas été ingéré par l'animal ayant accédé à la chambre soit retombe dans le récipient où il était originellement stocké, soit est récupéré par un élément de récupération, et est ainsi nécessairement comptabilisé dans le poids pesé par le système de pesée. Un poids d'aliments n'ayant pas été ingérés par l'animal ayant accédé à la chambre est donc estimé de manière plus précise par le dispositif. C'est pourquoi une quantité d'aliments consommée par l'animal, qui dépend directement du poids déterminé par le système de pesée, peut être estimée avec davantage de précision par le dispositif.

De plus, le fait que la balance soit agencée dans la chambre où se trouve le récipient, et où l'animal peut accéder permet de peser le récipient et son contenu pendant que l'animal prélève des aliments dans la cavité du récipient. Les données de poids acquises par la balance permettent ainsi de suivre précisément la cinétique de consommation de l'animal au cours de son repas.

Le dispositif selon l'invention peut comprendre par ailleurs les caractéristiques optionnelles suivantes, prises seules ou en combinaison lorsque cela est techniquement possible.

Le ratio entre, d'une part, la distance maximale entre l'élément de récupération et la paroi de référence, et, d'autre part, la distance totale séparant la paroi de référence de la paroi opposée à la paroi de référence par rapport à la chambre, est préférentiellement inférieur à 4 %, voire inférieur à 3,5 %, voire inférieur à 3 %, voire inférieur à 2,5 %, voire inférieur à 2 %, voire inférieur à 1,5 %, voire inférieur à 1 %, voire inférieur à 0,5 %, voire inférieur à 0,25 %, voire inférieur à 0,1 %.

La paroi jusqu'à laquelle s'étend l'élément de récupération peut être une première des parois latérales.

Le dispositif peut comprendre un deuxième élément de récupération d'aliments s'étendant depuis la cavité du récipient jusqu'à une deuxième des parois, dans lequel le récipient est agencé entre la première paroi et la deuxième paroi.

Le récipient peut présenter deux bords opposés, et le récipient peut présenter une largeur mesurée entre ses deux bords opposés qui est sensiblement égale à une distance séparant les première et deuxième parois, de sorte que le récipient s'étende sensiblement depuis la première paroi jusqu'à la deuxième paroi. Dans ce cas, le premier élément et le deuxième élément de récupération peuvent forment deux rebords supérieurs du récipient s'étendant chacun depuis la cavité jusqu'à l'un des bords. Ce mode de réalisation présente l'avantage d'être simple à mettre en oeuvre et de ne requérir qu'une seule balance.

Le dispositif peut comprendre des joints d'étanchéité flexible reliant respectivement les bords opposés du récipient aux première et deuxième parois.

Le dispositif peut comprendre comprenant un premier élément de récupération d'aliments comprenant un deuxième récipient pesable indépendamment du récipient définissant la cavité, auquel cas le système de pesée comprend en outre : une deuxième balance configurée pour acquérir des mesures indicatives du poids du deuxième récipient et d'aliments récupérés par le deuxième récipient, et une unité de traitement configurée pour déterminer le poids des aliments qui ont été prélevés dans le récipient et qui n'ont été récupérés par aucun élément de récupération au cours de la période de temps, à partir des mesures acquises par la première balance et des mesures acquises par la deuxième balance. Ce mode de réalisation a pour avantage de pouvoir déterminer précisément la quantité d'aliments qui a été projetée hors du récipient définissant la cavité, ce qui peut constituer une information d'intérêt.

Le récipient définissant la cavité peut comprendre un premier rebord supérieur s'étendant depuis la cavité vers l'une des parois de manière à surplomber le deuxième récipient.

Le dispositif peut comprendre un deuxième élément de récupération d'aliments comprenant un troisième récipient pesable indépendamment du récipient définissant la cavité et du deuxième récipient, auquel cas le système de pesée comprend une troisième balance configurée pour acquérir au moins une mesure indicative du poids du troisième récipient et d'aliments récupérés par le troisième récipient, et l'unité de traitement est configurée pour calculer le poids des aliments qui ont été prélevés dans le récipient et qui n'ont été récupérés par aucun élément de récupération au cours de la période de temps, à partir des mesures acquises par les première, deuxième et troisième balances.

Le récipient définissant la cavité peut comprendre un deuxième rebord supérieur s'étendant depuis la cavité vers une autre des parois de manière à surplomber le troisième récipient, la cavité étant ménagée entre les premier et deuxième rebords supérieurs.

Le système de pesée peut comprendre une balance et un filtre à réponse impulsionnelle infinie configuré pour éliminer ou non une mesure acquise par la balance en fonction d'une mesure de poids précédemment acquise par la même balance.

Le système de pesée peut comprendre une balance électronique, moins précise qu'une balance ayant une précision de 0,01 grammes, la balance électronique ayant par exemple une précision de 0,1 grammes.

La fenêtre peut présenter un diamètre inférieur ou égal à 19 centimètres, de préférence inférieur ou égal à 14 centimètres.

Dans le présent texte, on considère que le diamètre d'un objet est la plus grande longueur qui sépare deux points de l'objet. Ainsi le diamètre de la fenêtre est la plus grande longueur qui sépare deux points du bord qui entoure et délimite cette fenêtre. Par exemple, si la fenêtre présente une forme rectangulaire, son diamètre est sa plus grande diagonale.

La fenêtre peut présenter un bord inférieur surélevé par rapport au récipient.

Le dispositif peut comprendre un rebord s'étendant entre la fenêtre et le récipient de manière à surplomber en partie le récipient, dans lequel le rebord est de préférence incliné vers le récipient pour qu'un aliment tombant sur le rebord retombe ensuite dans le récipient.

Le dispositif peut comprendre des moyens de réglage des dimensions de la fenêtre.

La fenêtre peut être agencée pour être à au moins 7 centimètres d'un sol sur lequel le dispositif est posé, de préférence au moins 9 centimètres du sol.

Le dispositif peut comprendre un toit présentant une forme convexe et/ou inclinée pour empêcher un animal de stationner sur le toit lorsque le dispositif est posé sur un sol.

La paroi avant peut être au moins en partie transparente.

Le dispositif peut comprendre des moyens de détection configurés pour détecter l'entrée et la sortie d'un animal dans la chambre via la fenêtre, auquel cas le système de pesée est configuré pour que la période de temps débute lorsque les moyens de détection détectent l'entrée de l'animal dans la chambre et se termine lorsque les moyens de détection détectent une sortie de l'animal hors de la chambre.

Les moyens de détection peuvent comprendre un émetteur de faisceau infrarouge, et un récepteur agencé pour recevoir le faisceau infrarouge émis par l'émetteur, l'émetteur étant agencé pour que le faisceau soit interrompu par un animal accédant à la chambre via la fenêtre.

Le dispositif peut comprendre un lecteur de radio-identification adapté pour recevoir d'une radio-étiquette portée par un animal accédant à la chambre via la fenêtre des données permettant d'identifier cet animal dans une base de données d'individus.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 est une vue de côté d'un récipient pour aliments selon un mode de réalisation de l'invention.
- La figure 2 est une vue de dessus du récipient représenté en figure 1.
- La figure 3 est une vue en perspective d'un dispositif de suivi de consommation d'aliments par un animal, selon un premier mode de réalisation de l'invention.
- La figure 4 est une vue de dessus du dispositif de suivi selon le premier mode de réalisation.
- La figure 5 est une vue de dessus du dispositif de suivi selon le premier mode de réalisation à l'intérieur duquel le récipient de la figure 1 est agencé.
- La figure 6 est une vue de côté du dispositif de suivi selon le premier mode de réalisation, dans une configuration fermée.
- La figure 7 est une vue de côté du dispositif de suivi selon le premier mode de réalisation, dans une configuration ouverte.
- La figure 8 est une vue en coupe du dispositif de suivi selon le premier mode de réalisation.
- La figure 9 représente de manière schématique certains éléments du dispositif de suivi selon le premier mode de réalisation.
- La figure 10 est une vue en coupe d'un dispositif de suivi selon un deuxième mode de réalisation.

Sur l'ensemble des figures, les éléments similaires portent des références identiques.

## DESCRIPTION DETAILLEE DE MODES DE REALISATIONS

### 1) Premier mode de réalisation de dispositif de suivi

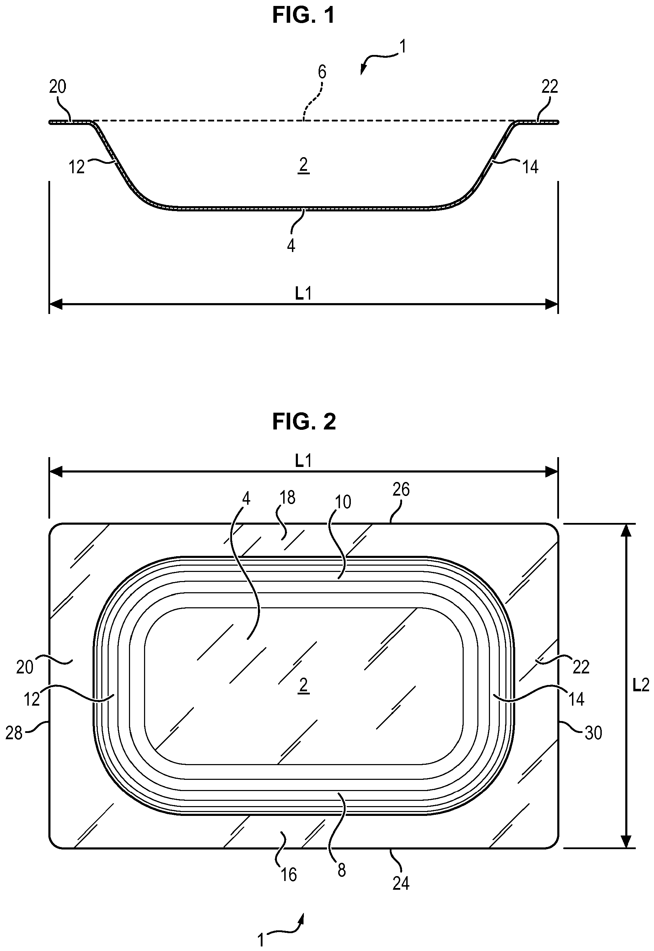

En référence aux **figures 1 et 2,** un récipient 1 pour aliments selon un premier mode de réalisation définit une cavité 2 pour recevoir des aliments.

Le récipient 1 se présente sous la forme d'une cuvette comprenant une paroi de fond 4 et une ouverture supérieure 6 permettant d'accéder à la cavité 2, la cavité 2 s'étendant entre cette ouverture supérieure 6 et la paroi de fond 4.

Le récipient 1 comprend par ailleurs une paroi avant 8, une paroi arrière 10, et deux parois latérales 12, 14 définissant entre elles la cavité 2 et l'ouverture supérieure 6.

Le récipient 1 présente par exemple une paroi de fond 4 sensiblement rectangulaire et une ouverture supérieure 6 sensiblement rectangulaire. L'ouverture supérieure 6 peut être de plus grandes dimensions que celles de la paroi de fond, comme cela est visible sur les figures 1 et 2 ; dans ce cas, les parois avant 8, arrière 10 et latérales 12, 14 du récipient 1 peuvent être évasées. Dans le mode de réalisation représenté sur les figures 1 et 2, l'ouverture supérieure 6 et la paroi de fond 4 présentent des formes rectangulaires à coins arrondis.

Le récipient 1 comprend par ailleurs quatre rebords supérieurs 16, 18, 20, 22 : un rebord avant 16, un rebord arrière 18, et deux rebords latéraux 20, 22.

L'ouverture supérieure 6 du récipient 1 est ménagée entre les deux rebords supérieurs latéraux 20 et 22, et entre les rebords supérieurs avant et arrière 16 et 18.

Le récipient 1 présente quatre bords libres 24, 26, 28, 30 : un bord avant 24, un bord arrière 26 opposé au bord avant 24 par rapport à la cavité 2, et deux bords latéraux 28, 30 mutuellement opposés par rapport à la cavité 2.

Par convention, L1 est la distance qui sépare les deux bords libres latéraux 28, 30, et la longueur L2 du récipient est la distance qui sépare les bords libres avant et arrière 24, 26.

Chaque rebord 16, 18, 20, 22 est sensiblement parallèle à la paroi de fond 4. En variante, au moins un de ces rebords 16, 18, 20, 22 est incliné vers la cavité 2, afin qu'un aliment tombé sur un tel rebord retombe naturellement dans la cavité 2.

Chaque rebord supérieur 16, 18, 20, 22 s'étend depuis la cavité 2 (plus précisément depuis l'ouverture supérieure 6 donnant dans cette cavité 2) jusqu'au bord libre 24, 26, 28, 30 correspondant.

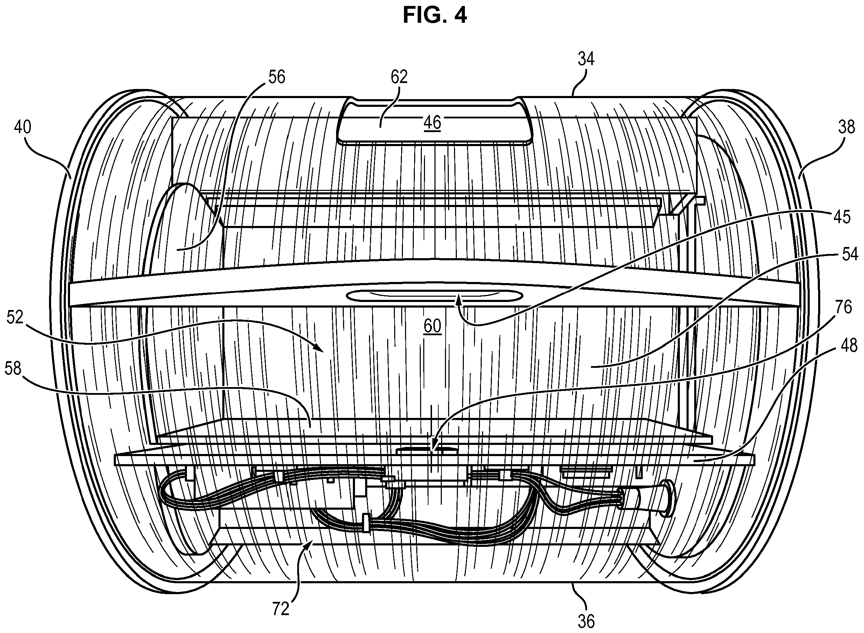

En référence aux **figures 4 à 7,** un dispositif de suivi de consommation d'aliments par un animal tel qu'un chat selon un premier mode de réalisation comprend un boîtier 32.

Le boîtier 32 comprend les quatre parois suivantes donnant à l'extérieur du dispositif : une paroi avant 34, une paroi arrière 36, et deux parois latérales 38, 40.

La paroi avant 34 relie l'une des parois latérales 38 à l'autre paroi latérale 40. De même, la paroi arrière 36 relie l'une des parois latérales 38 à l'autre paroi latérale 40.

Le boîtier 32 comprend par ailleurs une base 42. Chacune des parois avant, arrière et latérales 34, 36, 38, 40 est reliée à la base 42. La base 42 est plane.

La base 42 présente une surface inférieure destinée à être en regard d'un support sur lequel le boîtier 32 est posé (sol, meuble, etc.), et une surface supérieure opposée à la surface inférieure.

Le dispositif de suivi comprend quatre pieds 44 fixés à la surface inférieure de la base 40. Ces pieds 44 sont réalisés dans un matériau susceptible d'adhérer à un sol lisse, de sorte à empêcher le boîtier 32 de glisser le long de ce sol, par exemple un matériau élastique, notamment en caoutchouc. Les pieds peuvent être remplacées par d'autres moyens de stabilisation du dispositif.

Les parois latérales 38, 40 sont planes et parallèles entre elles.

La paroi avant 34 est courbe : depuis la base 42 vers le sommet du boîtier 32, la paroi avant 34 est incurvée vers l'intérieur du boîtier 32.

Une fenêtre 46 est formée dans la paroi avant 34. Cette fenêtre 46 permet à un animal situé à l'extérieur du boîtier 32 d'accéder à l'intérieur du boîtier 32. La fenêtre est par exemple de forme rectangulaire.

La paroi arrière 36 est également courbe : depuis la base 42 vers le sommet du boîtier 32, la paroi arrière est incurvée vers l'intérieur du boîtier 32.

La paroi avant et la paroi arrière 34, 36 se rejoignent au sommet du boîtier 32 de sorte à définir un toit 47 opposé à la base 42 par rapport au boîtier 32.

Le toit 47 est convexe et/ou incliné par rapport à un sol sur lequel les pieds 44 du boîtier 32 reposent. De cette manière, un animal ne peut pas stationner sur le toit sans glisser. Ainsi, un animal voulant passer sa tête par la fenêtre 46 pour accéder à l'intérieur du boîtier 32 n'est pas empêché de le faire à cause d'un autre animal qui stationnerait sur le toit.

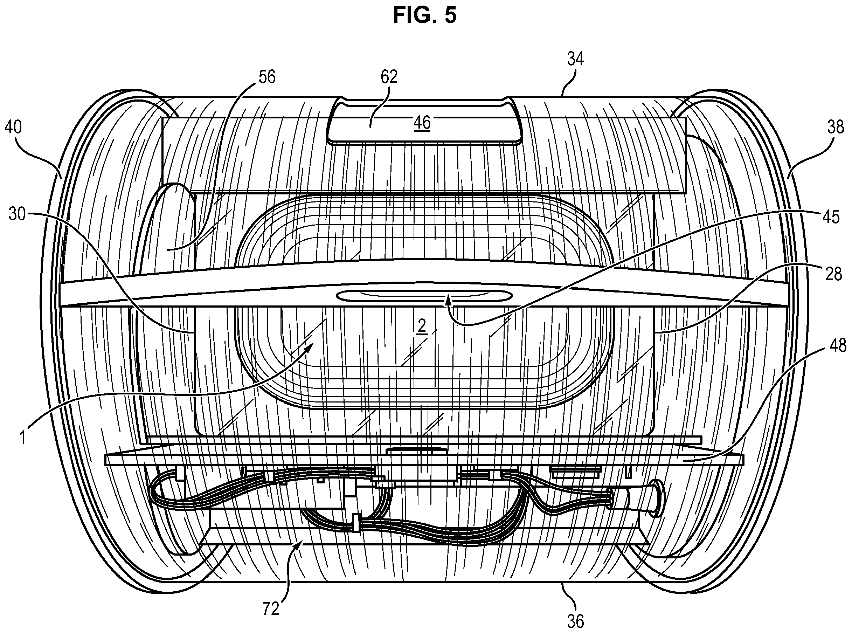

Le boîtier 32 comprend une poignée 45 préhensible par un utilisateur, de sorte à rendre le dispositif transportable. De préférence, la poignée est formée sur le toit 47, comme représenté en figures 4 et 5. Une telle poignée 45 est notamment avantageuse dans le cas de tests réalisés dans différents lieux.

Avantageusement, la fenêtre 46 est ajustée de sorte à ne laisser passer que la tête d'un animal.

De préférence, la fenêtre 46 présente un bord inférieur surélevé par rapport au récipient 1 lorsque ce dernier est posé dans le boîtier 32.

Il peut être prévu dans le dispositif de suivi des moyens de réglage des dimensions de la fenêtre 46 (non-illustrés). Ces moyens de réglage peuvent comprendre par exemple un panneau coulissant le long de la paroi avant 34. Ces moyens de réglage ont pour avantage de permettre d'adapter le dispositif de suivi à des animaux ayant des têtes de tailles différentes.

Le bord inférieur de la fenêtre 46 est de préférence agencé pour être à au moins 7 centimètres d'un sol sur lequel le dispositif est posé, de préférence au moins 9 centimètres du sol. Une telle surélévation permet à la paroi avant de former un obstacle entre l'animal et l'intérieur du boîtier 32. De la sorte, cette surélévation rend plus difficile une entrée complète d'un animal à l'intérieur du boîtier. Les risques d'une installation longue de l'animal dans le boîtier sont donc diminués grâce à cette surélévation.

Il est à noter que le dispositif ne comprend pas de couloir formé entre deux parois parallèles et sur lequel l'animal devrait marcher pour accéder à l'intérieur du boîtier 32. Un tel couloir pourrait oppresser l'animal. Un tel couloir pourrait aussi être occupé par un tel animal, bloquant ainsi l'accès à l'intérieur du boitier pour d'autres animaux. Un tel blocage est indésirable car perturbe le comportement habituel de ces animaux.

Si l'animal est un chat, et notamment un chat adulte, chaque bord latéral de la fenêtre 46 est de préférence séparé de chaque paroi latérale 38, 40 du boîtier d'une distance supérieure ou égale à 9 centimètres.

La fenêtre 46 présente un diamètre inférieur ou égal à 19 centimètres, de préférence inférieur ou égal à 14 centimètres.

Ces dimensions sont avantageuses car adaptées pour n'autoriser qu'un seul chat adulte à passer sa tête à travers la fenêtre. Ainsi, il est certain que deux chats adultes ne peuvent pas accéder simultanément à l'intérieur du boîtier 32 et y prélever en même temps de la nourriture qui s'y trouve, ce qui permet, comme on le verra dans la suite, d'estimer précisément une consommation individuelle d'un chat parmi une cohorte de plusieurs chats.

Ces dimensions avantageuses, combinées au fait que la fenêtre est surélevée, ont pour effet d'empêcher de manière encore plus efficace une installation indésirable d'un chat à l'intérieur du boîtier 32.

Par exemple, la distance qui sépare le bord inférieur et le bord supérieur de la fenêtre peut être de 10 centimètres, et la distance qui sépare les deux bords latéraux de la fenêtre est de 9 centimètres.

Au moins une des parois 34, 36, 38, 40 du boîtier 32 est au moins en partie transparente. Ceci permet à un animal se trouvant à l'extérieur du dispositif de voir ce qui se trouve dans le boîtier 32, et à un animal ayant passé sa tête à travers la fenêtre de voir ce qu'il se passe à l'extérieur du boîtier 32, et évite donc de les stresser. Si l'animal était stressé, cela pourrait affecter son comportement et en particulier sa consommation d'aliments placés à l'intérieur du boîtier 32. Ainsi, la consommation individuelle que l'on cherche à suivre au cours du temps au moyen de ce dispositif de suivi pourrait être biaisée par un tel stress.

De préférence, la paroi avant 34 est au moins en partie transparente, par exemple totalement transparente. Ceci est avantageux car permet de réduire fortement le stress de certains animaux tel que le chat. En effet, un chat serait particulièrement stressé de ne pouvoir vérifier ce qu'il se passe autour de lui alors qu'il a passé sa tête à travers la fenêtre 46.

Le boîtier 32 comprend par ailleurs une cloison de séparation 48 de l'intérieur du boîtier 32 en deux compartiments : un premier compartiment et un deuxième compartiment.

La cloison de séparation 48 s'étend parallèlement aux parois avant et arrière 34, 36 du boîtier 32. La cloison rejoint les parois latérales 38 et 40.

Le premier compartiment est ménagé entre la cloison de séparation 48 et la paroi arrière 36. Le deuxième compartiment est ménagé entre la cloison de séparation 48 et la paroi avant 34. Comme la fenêtre 46 est formée dans la paroi avant 32, cette fenêtre 46 donne accès au deuxième compartiment.

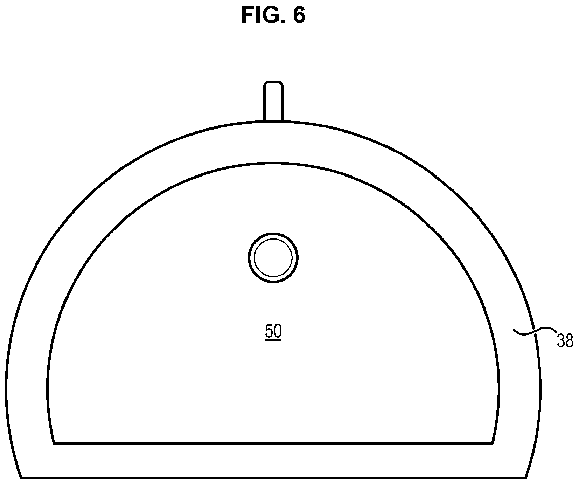

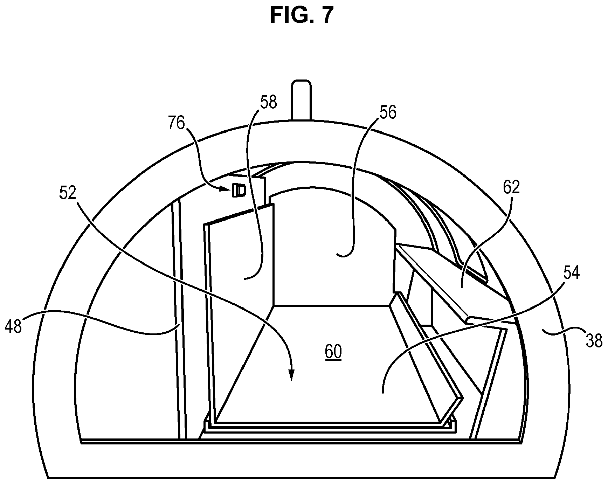

Le boîtier 32 comprend une porte 50 formée dans la paroi latérale 38, susceptible d'être ouverte pour permettre à une personne à l'extérieur du dispositif de suivi d'accéder au deuxième compartiment (comme représenté en figure 7), voire au premier compartiment, et d'être fermée pour empêcher à un animal d'entrer dans le boîtier 32 par la porte 50 (comme représenté en figure 6). Les dimensions de la porte 50 sont adaptées pour permettre de faire entrer le récipient 1 dans le deuxième compartiment ou de l'en extraire. Ceci présente l'avantage de pouvoir nettoyer le récipient 1 à l'extérieur du dispositif, ce qui est plus aisé que d'opérer un tel nettoyage alors que le récipient 1 est dans le boîtier 32, par exemple dans le deuxième compartiment.

Le dispositif de suivi comprend un support 52 pour le récipient 1. Le support 52 est agencé dans le boîtier 32, par exemple dans le deuxième compartiment. Ce support 52 est de préférence amovible par rapport au reste du dispositif, de sorte à pouvoir être avantageusement extrait du boîtier 32.

Le support 52 comprend une paroi de fond 54 s'étendant parallèlement à la base 42 du boîtier 32. Le récipient 1 est destiné à reposer sur la paroi de fond 54 du support 52.

Le support 52 comprend en outre avantageusement au moins une paroi formant un écran entre le récipient posé sur le support et le boîtier 32. Ceci permet de faciliter encore le nettoyage, les parois pouvant être salies étant celles du support 52 amovible et non celles du boîtier 32.

Plus précisément, le support 52 peut comprendre une première paroi 56 formant un écran entre le récipient 1 posé sur le support 52 et la paroi latérale 38 du boîtier 32, et une deuxième paroi 58 formant un écran entre le récipient 1 posé sur le support 32 et la cloison de séparation 48. La première paroi 56 et la deuxième paroi 58 sont reliées à la paroi de fond 54 et s'étendent perpendiculairement à celle-ci, donc verticalement. La première paroi 56 et la deuxième paroi 58 sont reliées entre elles de sorte à former un L (comme représenté en figure 7).

De façon générale, le dispositif de suivi comprend une paroi avant, une paroi arrière et deux parois latérales définissant entre elles une chambre 60 dans laquelle le récipient 1 est agencé. Autrement dit, le récipient 1 se trouve entre les quatre parois qui définissent la chambre 60.

Dans le premier mode de réalisation de dispositif de suivi, lorsqu'un support 52 est présent, les quatre parois qui définissent la chambre 60 sont les suivantes : la paroi latérale 38 du boîtier 32, la paroi avant 34 du boîtier 32, la première paroi 56 du support 52 et la deuxième paroi 58 du support 52. La paroi de fond 54 du support 52 définit par ailleurs un fond de cette chambre 60. Dans ce mode de réalisation, la chambre 60 où est reçu le récipient 1 est incluse dans le deuxième compartiment.

La fenêtre 46 formée dans la paroi avant 34 du boîtier 32 permet à un animal d'accéder à la chambre 60 et de prélever des aliments qui se trouvent dans la cavité 2 du récipient 1, lorsque le récipient est lui-même dans la chambre 60.

Le boîtier 32 comprend par ailleurs un rebord 62 s'étendant entre la fenêtre 46 et le récipient 1 de manière à surplomber le récipient 1, lorsque le récipient est agencé dans la chambre.

Le rebord 62 est de préférence incliné vers le récipient 1 pour qu'un aliment tombant sur le rebord retombe ensuite dans le récipient. L'angle d'inclinaison du rebord 62 est par exemple compris entre 15 degrés et 45 degrés par rapport à la base 42. Le rebord 62 se trouve sous la fenêtre 46.

Par ailleurs, le dispositif de suivi comprend au moins un élément de récupération d'aliments, l'élément de récupération étant agencé dans la chambre 60 entre la cavité 2 du récipient 1 reçu dans la chambre 60 et l'une des parois 34, 38, 56, 58 qui définissent entre elles la chambre 60.

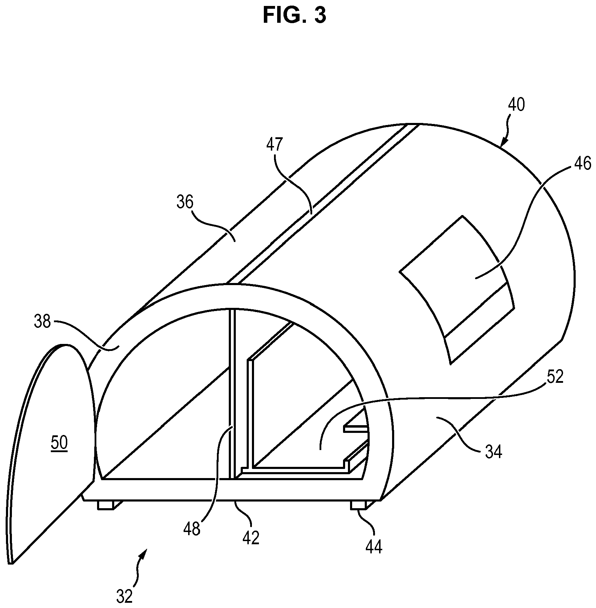

Dans le premier mode de réalisation représenté sur les figures 3 à 9, les éléments de récupération sont au nombre de quatre. Les éléments de récupération d'aliments sont formés par les quatre rebords supérieurs 12, 14, 16, 18 du récipient 1 lui-même.

Au moins un de ces éléments de récupération (donc au moins un de ces rebords supérieurs 12, 14, 16, 18) s'étend sensiblement depuis la cavité 2 du récipient jusqu'à l'une des parois 34, 38, 56, 58 définissant la chambre 60. Ceci permet à cet élément de récupération de récupérer davantage d'aliments échappés de la cavité 2 du récipient 1.

Comme indiqué précédemment, on considère qu'un élément de récupération s'étend depuis la cavité du récipient « jusqu'à » une paroi de référence définissant la chambre 60 où est reçu le récipient 1, lorsque la distance maximale entre l'élément de récupération et la paroi de référence est inférieure à 5 % de la distance totale séparant la paroi de référence de la paroi qui lui est opposée par rapport à la chambre 60. Dans le cas où la paroi de référence est la paroi latérale 38 du boîtier, la paroi qui lui est opposée par rapport à la chambre 60 est la première paroi 56 du support 52 ; dans le cas où la paroi de référence est la paroi avant 38 du boîtier 32, la paroi qui lui est opposée par rapport à la chambre 60 est la deuxième paroi 58 du support 52.

Dans le mode réalisation représenté sur les figures 4 à 7, les rebords supérieurs 18, 20 et 22 s'étendent respectivement jusqu'aux parois 58, 34 et 56 définissant la chambre où se trouve le récipient 1.

En revanche, en présence du rebord 62, le rebord supérieur avant 16 du récipient est à distance de la paroi avant 34 du boîtier 32. Cette distance est supérieure ou égale à 5 centimètres. Un tel agencement est plus confortable pour l'animal ayant passé sa tête à travers la fenêtre 46. En effet, si le récipient 1 était trop proche de la paroi avant 34, l'animal devrait baisser sa tête selon un angle relativement important, ce qui est inconfortable.

La largeur L1 du récipient 1 mesurée entre ses deux bords latéraux opposés 28, 30 est sensiblement égale à la distance séparant la paroi latérale 38 du boîtier et la paroi 56 du support 52, de sorte que le récipient 1

s'étende sensiblement depuis la paroi latérale 38 jusqu'à la première paroi 56.

En revanche, en présence du rebord 62, la longueur L2 du récipient 1 mesurée entre ses deux bords libres avant et arrière opposés 24, 26 est inférieure à la distance séparant la paroi avant du boîtier 34 et la deuxième paroi 58 du support 52.

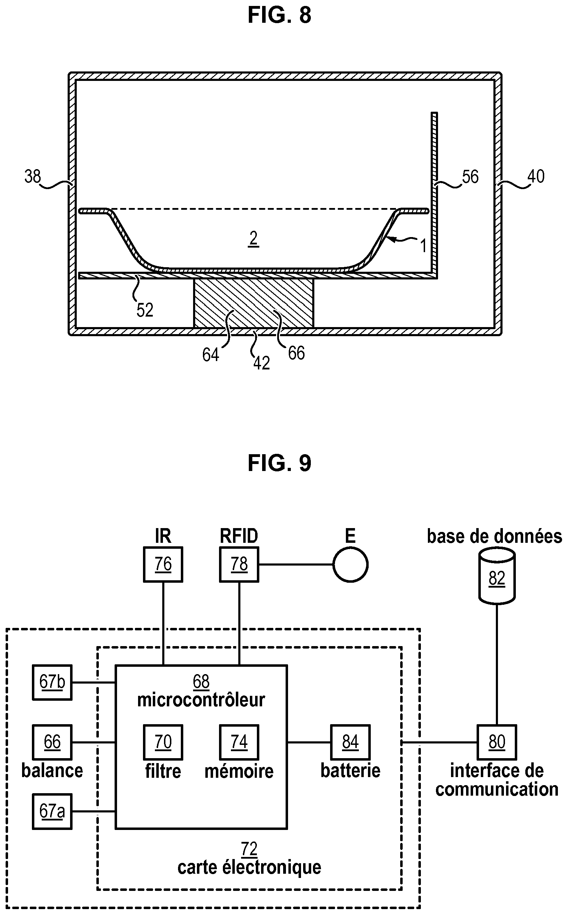

En référence à la **figure 8,** le dispositif de suivi comprend par ailleurs un système de pesée 64. De manière générale, le système de pesée 64 est configuré pour déterminer un poids d'aliments qui ont été prélevés dans le récipient 1 (lorsque ce récipient 1 repose dans la chambre 60 pour y être pesé) et qui n'ont en outre pas été récupérés par aucun élément de récupération du dispositif de suivi au cours d'une période de temps donnée.

Autrement dit, le système de pesée 64 est configuré pour déterminer un poids d'aliments correspondant à la différence entre : le poids d'aliments qui ont été prélevés dans le récipient 1 dans une période de temps donnée, et un poids d'aliments qui ont été récupérés par l'ensemble des éléments de récupérations dans la période de temps donnée. Ce poids d'aliments correspond au poids d'aliments consommé pendant la période de temps donnée.

Le système de pesée comprend typiquement une balance 66.

La balance 66 est agencée dans le deuxième compartiment. La balance 66 repose sur la surface supérieure de la base 42. La balance 66 est par exemple fixée à la surface supérieure de la base 42.

Le support 52 est posé sur la balance 66, de sorte que la balance puisse peser simultanément : le support 52, le récipient 1 posé sur le support 52 dans la chambre 60, ainsi que des aliments se trouvant non seulement dans la cavité 2 du récipient 1 mais également sur chaque rebord supérieur du récipient 1 assurant une fonction de récupération d'aliments.

La balance 66 est de préférence une balance électronique.

La balance 66 est de préférence moins précise qu'une balance ayant une précision de 0,01 grammes. Les inventeurs se sont aperçus qu'une précision de plus de 0,01 grammes était si élevée qu'elle serait de nature à créer des variations de poids indésirables dans une succession de mesures de poids acquises par la balance. De telles variations sont par exemple causées par l'environnement, comme par un animal marchant à proximité du dispositif. Utiliser une balance 66 de précision moindre permet d'éviter les variations de poids indésirables susmentionnées. La balance 66 a de préférence une précision de 0,1 grammes.

Par ailleurs, la balance 66 est de préférence plus précise qu'une balance ayant une précision de 0,2 grammes. Ceci permet de suivre avec précision la consommation en liquide d'un animal lorsque l'aliment dans le récipient est un liquide.

La balance 66 est par exemple configurée pour acquérir une succession de mesures de poids, par exemple périodiquement.

En référence à la **figure 9,** le système de pesée 64 comprend un filtre à réponse impulsionnelle 70 infinie qui est configuré pour éliminer ou non une mesure acquise par la balance 66 en fonction de la valeur d'une mesure de poids précédemment acquise par la même balance 66. Un avantage procuré par ce filtre à réponse impulsionnelle est de lisser des variations de poids indésirables dans une succession de mesures acquises par la balance 66. De telles variations de poids indésirables sont typiquement causées lorsque l'animal déplace le récipient 1, par exemple en appuyant dessus avec sa patte. Dans la perspective de suivre une consommation d'aliments chez un animal, le poids du récipient 1 et de son contenu ne peut que diminuer au cours du temps (chaque fois qu'un animal prélève des aliments dans le récipient). Ce filtre à réponse impulsionnelle infinie 70 est avantageux car permet d'éviter de recenser des augmentations de poids au cours du temps.

Le filtre à réponse impulsionnelle infinie est configuré pour éliminer une mesure de valeur B acquise par la balance 66 seulement si la valeur B est supérieure à la valeur d'une précédente mesure de valeur A additionnée d'une certaine valeur X prédéterminée (autrement dit, si B>A+X). La valeur X est une valeur prédéterminée résiduelle représentative d'un bruit fonction de la précision de la balance 66. En variante ou complément, le filtre à réponse impulsionnelle infinie est configuré pour éliminer la mesure de valeur B dans le cas ou B<A+Y, ou Y est prédéterminé.

Le filtre à réponse impulsionnelle infinie 70 est par exemple un composant externe à la balance 66. Il est inclus dans une carte électronique 72 agencée dans le premier compartiment, de façon à être isolé des aliments se trouvant dans le deuxième compartiment.

Le dispositif de suivi comprend par ailleurs de préférence une mémoire 74 pour mémoriser des mesures acquises par la balance 66 et/ou des données produites par le filtre à réponse impulsionnelle infinie 70. Cette mémoire 74 est typiquement incluse dans la carte électronique 72.

Le dispositif de suivi comprend par ailleurs de préférence des moyens de détection 76 configurés pour détecter l'entrée et la sortie d'un animal dans la chambre, via la fenêtre d'accès 46.

Par exemple, les moyens de détection 76 comprennent un émetteur de faisceau infrarouge, et un récepteur agencé pour recevoir le faisceau infrarouge émis par l'émetteur, l'émetteur étant agencé pour que le faisceau soit interrompu par un animal accédant à la chambre via la fenêtre 46.

Le dispositif de suivi comprend par ailleurs un lecteur de radio-identification 78 adapté pour recevoir d'une radio-étiquette E portée par un animal accédant à la chambre 60 via la fenêtre 46, des données permettant d'identifier cet animal dans la base de données 82.

Les moyens de détection 76 sont adaptés pour transmettre des signaux au système de pesée 64, ces signaux étant indicatifs d'une entrée et d'une sortie d'un animal dans/hors de la chambre 60.

L'émetteur et le récepteur sont agencés dans le boîtier 32.

L'émetteur et le récepteur sont par exemple agencés sur la cloison 48 en face de la fenêtre 46, de sorte que le faisceau infrarouge émis par l'émetteur traverse la fenêtre 46 et sorte donc à l'extérieur du boîtier 32. Lorsqu'un animal accède à la chambre, ce faisceau est réfléchi par le corps de l'animal (typiquement sa tête) puis capté par le récepteur, qui se trouve à proximité de l'émetteur. Il est à noter que, dans ce cas, le rayon émis par l'émetteur peut également être réfléchi par un animal qui se trouve à l'extérieur du boîtier 32, ce qui pourrait conduire à des fausses alarmes ou des détections manquées. Ainsi, lorsque l'émetteur et le récepteur sont agencés à cet endroit de la cloison 48, le lecteur 78 fait partie des moyens de détection 76. Un signal d'entrée est émis dans le cas où les deux conditions suivantes sont réunies : i) le rayon émis par l'émetteur est capté par le récepteur, et ii) une radio-étiquette E portée par un animal entre dans la portée du lecteur 76.

En variante, l'émetteur est agencé pour que le faisceau qu'il émet se propage dans une direction parallèle à la paroi avant 34. Par exemple, l'émetteur et le récepteur sont agencés de part être d'autre de la fenêtre. Lorsque le récepteur ne reçoit plus le faisceau, cela signifie que le corps de l'animal ayant passé sa tête à travers la fenêtre a interrompu le faisceau.

Le dispositif de suivi comprend par ailleurs de préférence une interface de communication 80 pour communiquer par réseau avec un serveur distant hébergeant une base de données 82 d'individus. L'interface de communication est de type radio sans fil (Wi-Fi, Bluetooth, etc.) ou filaire. De préférence, l'interface de communication utilise le protocole ZigBee, qui présente notamment comme avantages d'être facilement configurable.

L'interface de communication 80 comprend par exemple une antenne ou un port Ethernet couplé à un composant réseau intégré à la carte électronique 72.

Le dispositif comprend en outre une batterie 84 pour fournir de l'énergie à tous les composants électroniques du dispositif (notamment le système de pesée 64, les moyens de détection 76 et le lecteur de radio-identification 78). La batterie 84 est agencée dans le premier compartiment.

Le dispositif de suivi selon le premier mode de réalisation fonctionne de la manière suivante.

Des aliments sont placés dans la cavité 2 du récipient 1. Le récipient 1 est placé dans la chambre 60 par la porte 50. La porte 50 est ensuite refermée.

Un animal souhaitant faire une séquence d'alimentation passe sa tête à travers la fenêtre 46 jusqu'à ce qu'il surplombe le récipient 1.

Comme indiqué précédemment, la surélévation de la fenêtre 46, les dimensions particulières de la fenêtre 46, et le caractère réglable de la fenêtre 46 sont autant de caractéristiques qui contribuent à éviter que l'animal ne pénètre entièrement dans la chambre 60, et en particulier que cet animal ne soit lui-même pesé par le système de pesée 64.

Les moyens de détection 76 détectent l'entrée de la tête de l'animal dans la chambre 60 via la fenêtre 46 (typiquement par détection, par le récepteur, d'une interruption du faisceau infrarouge émis par l'émetteur). Les moyens de détection 76 transmettent au système de pesée 64 un signal indicatif d'une telle entrée. De préférence, le signal d'entrée est transmis à la carte électronique 72.

Une mesure initiale P acquise par la balance 66 est sélectionnée à compter de la réception de ce signal d'entrée. La mesure initiale P est mémorisée dans la mémoire 74. Cette mesure initiale P est représentative du poids cumulé du support 52, du récipient 1 et de son contenu avant consommation.

Par ailleurs, l'animal porte une radio-étiquette E qui entre en communication avec le lecteur de radio-identification 78 lorsque celui-ci accède à la chambre 60. Le lecteur de radio-identification 78 reçoit de la radio-étiquette E portée par l'animal un identifiant propre à cet individu. Cet identifiant d'individu est mémorisé dans la mémoire 74 en association avec la mesure initiale P.

Une fois entré dans la chambre 60, l'animal peut prélever des aliments dans la cavité 2 du récipient 1. La balance 66 continue donc à acquérir de nouvelles mesures, ce qui permet d'avoir un suivi précis de la cinétique de consommation de l'animal. Typiquement, la balance 66 acquiert des mesures périodiquement.

Certains aliments prélevés sont ingérés par l'animal. D'autres aliments prélevés peuvent retomber dans la cavité 2 du récipient 1. Encore d'autres aliments prélevés peuvent être projetés par l'animal effectuant un mouvement intempestif de la tête en direction d'une des parois définissant la chambre 60, puis tomber sur l'un des rebords supérieurs 12, 14, 16, 18 du récipient 1 (autrement dit, être récupérés par l'un des éléments de récupération du dispositif).

Une fois la séquence d'alimentation terminée, l'animal sort de la chambre 60 en retirant sa tête par la fenêtre 46 hors du boîtier 32.

A cet instant, les moyens de détection 76 détectent la sortie de la tête de l'animal hors de la chambre 60 via la fenêtre 46 (typiquement par détection, par le récepteur, d'une faisceau infrarouge émis par l'émetteur et qui était jusqu'à présent interrompu par le corps de l'animal, typiquement par sa tête ou son cou). Les moyens de détection 76 transmettent au système de pesée 64 un signal indicatif d'une telle sortie.

Une mesure finale Q acquise par la balance 66, puis sélectionnée par la carte électronique 72 immédiatement avant la réception de ce signal de sortie, est mémorisée dans la mémoire 74. Cette mesure finale Q est représentative du poids cumulé du support 52, du récipient 1 et de leur contenu.

Le système de pesée 64 calcule la différence ∆P = Q-P. Cette différence de poids ∆P est représentative d'un poids d'aliments qui ont été prélevés dans le récipient 1 mais qui n'ont pas été récupérés par aucun des éléments de récupération 12, 14, 16, 18 du dispositif de suivi, c'est-à-dire un poids d'aliments effectivement consommés par l'animal durant la séquence d'alimentation.

Cette différence de poids ∆P est ensuite mémorisée dans la mémoire 74 en association avec l'identifiant de l'individu issu de la radio-étiquette E. Cette association permet de savoir quel est l'individu qui a prélevé un poids d'aliments dans le récipient 1.

Ladite différence de poids ∆P calculée et l'identifiant associé peuvent être communiqués, au moyen de l'interface de communication 80, au serveur distant et mémorisés dans la base de données 82 de ce serveur.

Le dispositif de suivi peut avantageusement être utilisé pour déterminer l'appétence d'un produit alimentaire, par exemple dans le cadre d'un test monadique ou dans le cadre d'un test versus.

En particulier, deux exemplaires du dispositif peuvent être utilisés dans le cadre d'un test versus. Les deux exemplaires renferment deux produits alimentaires différents (typiquement, un produit témoin et un produit à tester, respectivement). En comparant les données acquises par les deux exemplaires de dispositif, on peut en déduire un niveau d'appétence pour le produit testé.

**2) Deuxième mode de réalisation de dispositif de suivi**

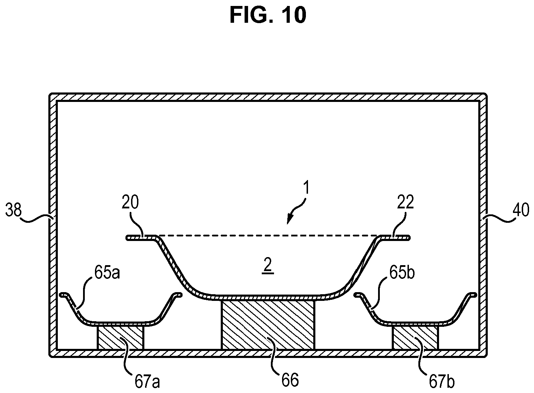

On a représenté en figure 10 un deuxième mode de réalisation de dispositif de suivi, qui diffère du dispositif de suivi selon le premier mode de réalisation par les caractéristiques suivantes.

Aucun support 52 n'est présent dans ce dispositif selon le deuxième mode de réalisation. Dans ce cas, le récipient 1 est directement posé sur la balance 66. La balance 66 pèse alors uniquement le récipient 1 et son éventuel contenu.

Les parois qui définissent la chambre où est reçu le récipient 1 sont alors les suivantes : la paroi latérale 38, la paroi latérale 40, la paroi avant 34 et la cloison de séparation 48.

Ce dispositif de suivi selon le deuxième mode de réalisation comprend un premier élément de récupération d'aliments comprenant un deuxième récipient 65a pesable indépendamment du récipient 1 définissant la cavité 2.

Par ailleurs, le système de pesée 64 comprend une deuxième balance 67a en sus de la balance 66. La deuxième balance 67a est configurée pour acquérir des mesures indicatives du poids du deuxième récipient 65a et d'aliments récupérés par le deuxième récipient 65a.

La deuxième balance 67a et le deuxième récipient 65a sont agencés entre le récipient 1 et l'une des parois du boîtier 32.

De préférence, le récipient 1 est agencé de sorte qu'un rebord supérieur du récipient 1 surplombe le deuxième récipient 65a. Ceci a pour avantage de limiter les risques de chute d'aliments entre le récipient 1 et le deuxième récipient 65a, échappant ainsi à toute pesée par le système de pesée 64.

Par exemple, dans le mode de réalisation représenté sur la figure 10, la deuxième balance 67a et le deuxième récipient 65a sont agencés entre le récipient 1 et la paroi latérale 38, et le rebord supérieur du récipient qui surplombe le deuxième récipient 65a est le rebord supérieur latéral 20.

Ce dispositif de suivi selon le deuxième mode de réalisation comprend par ailleurs un deuxième élément de récupération d'aliments comprenant un troisième récipient 65b pesable indépendamment du récipient 1 définissant la cavité 2 et du deuxième récipient 65a.

Par ailleurs, le système de pesée 64 comprend une troisième balance 67b. La troisième balance 67b est configurée pour acquérir des mesures indicatives du poids du troisième récipient 65b et d'aliments récupérés par le deuxième récipient 65b.

La troisième balance 67b et le troisième récipient 65b sont agencés entre le récipient 1 et l'une des parois latérales du boîtier 32, par exemple la paroi latérale 40. En d'autres termes, le récipient 1 est agencé entre les éléments de récupérations formés par les récipients supplémentaires 65a et 65b.

De préférence, le récipient 1 est agencé de sorte qu'un rebord supérieur du récipient 1 surplombe le deuxième récipient 65b. Ceci a pour avantage de limiter les risques de chute d'aliments entre le récipient 1 et le deuxième récipient 65b, échappant ainsi à toute pesée par le système de pesée 64.

Par exemple, dans le mode de réalisation représenté sur la figure 10, la troisième balance 67b et le troisième récipient 65b sont agencés entre le récipient 1 et la paroi latérale 40, et le rebord supérieur du récipient qui surplombe le troisième récipient 65b est le rebord supérieur latéral 22.

Les balances 67a, 67b sont par exemple identiques à la balance 66.

Le système de pesée 64 comprend par ailleurs une unité de traitement configurée pour déterminer le poids des aliments qui ont été prélevés dans le récipient mais qui n'ont pas été récupérés par chaque élément de récupération au cours de la période de temps, à partir des mesures acquises par la première balance 66 et des mesures acquises par la deuxième balance 67a et la troisième balance 67b. Cette unité de traitement est par exemple la carte électronique 72.

Dans ce deuxième mode de réalisation, les éléments de récupération d'aliments formés par les rebords supérieurs 16, 18, 20, 22 du récipient 1 représenté en figure 1 sont conservés, mais pourraient également être supprimés du récipient 1.

Le deuxième récipient 65a peut s'étendre jusqu'à la paroi latérale 38 du boîtier. Par ailleurs, le troisième récipient 65b peut s'étendre jusqu'à la paroi latérale 40 du boîtier.

Le dispositif selon ce deuxième mode de réalisation fonctionne de la même manière que le dispositif de suivi selon le premier mode de réalisation, aux différences qui suivent près.

Chaque balance supplémentaire 67a, 67b applique les mêmes étapes que celles mises en oeuvre par la balance 66, en parallèle de celle-ci.

Il est ainsi mémorisé dans la mémoire 74 en plus de la mesure initiale P et de la mesure finale Q, pour chaque récipient supplémentaire :

• une mesure initiale P(i) indicative d'un poids d'aliments récupérés par le récipient supplémentaire d'indice i lors de l'entrée de l'animal dans la chambre 60 (obtenue selon les mêmes modalités que pour la première moyenne P1),

• une mesure finale Q(i) indicative d'un poids d'aliments récupérés par le récipient supplémentaire d'indice i lors de la sortie de l'animal dans la chambre 60 (obtenue selon les mêmes modalités que pour la deuxième moyenne P2),

L'unité de traitement (la carte électronique 72) calcule ensuite la valeur ΔP suivante :

$$\Delta P = (Q - P) - \sum_{i=1}^{K} (Q(i) - P(i))$$

où K est le nombre de récipients supplémentaires et de balances supplémentaires présents dans le dispositif (K=2 dans l'exemple illustré en figure 10).

La valeur ΔP est représentative d'un poids d'aliments qui ont été prélevés dans le récipient 1 mais qui n'ont pas été récupérés par aucun des éléments de récupération du dispositif de suivi selon le deuxième mode de réalisation, c'est-à-dire le poids d'aliments effectivement consommés par l'animal durant la séquence d'alimentation.

Bien entendu, le deuxième mode de réalisation peut faire l'objet de variantes.

Par exemple, on peut prévoir que K peut être égal à 1, 2, 3 ou 4. Dans le cas K=4, les quatre récipients supplémentaires sont agencés entre le récipient et, respectivement, les quatre parois qui définissent la chambre 60.

3) Autres modes de réalisation

D'autres modes de réalisations de dispositif de suivi sont envisageables.

Le support 52 est facultatif dans le premier mode de réalisation. Dans ce cas, le récipient 1 est directement posé sur la balance 66. La balance 66 pèse alors uniquement le récipient 1 et son éventuel contenu.

Dans le cas où aucun support 52 n'est présent dans le dispositif de suivi, les parois qui définissent la chambre où est reçu le récipient 1 peuvent être les suivantes : la paroi latérale 38, la paroi latérale 40, la paroi avant 34 et la cloison de séparation 48.

La cloison de séparation 48 est également facultative. Les parois qui définissent la chambre où est reçu le récipient 1 peuvent être alors les suivantes : la paroi latérale 38, la paroi latérale 40, la paroi avant 34 et la paroi arrière 36.

Bien entendu, lorsque le support 52 et/ou la cloison de séparation 48 est/sont supprimée(s), la largeur et/ou la longueur du récipient 1 peut/peuvent alors être augmentée(s) de sorte qu'au moins un des éléments de récupérations s'étende depuis la cavité 2 jusqu'à l'une des parois définissant la chambre 60.

En outre, les différents types d'éléments de récupération peuvent être mélangés dans certains modes de réalisation (au moins un récipient supplémentaire + au moins un rebord supérieur du récipient, s'étendant le cas échéant jusqu'à une des parois définissant la chambre 60). Différentes configurations des éléments de récupération pourraient être envisagées : un, de préférence deux, de préférence trois, de préférence quatre rebords et/ou un, de préférence deux, de préférence trois, de préférence quatre récipients supplémentaires. De manière avantageuse, au moins un élément de récupération d'étend jusqu'à chaque paroi définissant la chambre 60. Ainsi, la perte d'aliments hors du récipient est minimisée et le dispositif permet de donner une consommation individuelle d'un individu sur une période donnée de manière fiable et précise.

Dans l'un quelconque des modes de réalisation décrits, au moins un joint d'étanchéité flexible peut relier un bord du récipient 1 à une des parois définissant la chambre 60. Par exemple, dans le premier mode de réalisation, il peut être prévu un premier joint d'étanchéité reliant le bord 28 à la paroi latérale 38 et/ou un deuxième joint d'étanchéité reliant le bord 30 à la paroi 56 (ou la paroi latérale 40 dans le cas où il n'y a pas de support 52).

Il a été vu que, dans le premier mode de réalisation, il existe une distance substantielle entre le rebord supérieur avant 16 du récipient et la paroi avant 34. En variante, il peut être prévu que ce rebord supérieur avant s'étende jusqu'à la paroi avant 34.

Dans ce cas, la longueur L2 du récipient 1 mesurée entre ses deux bords libres avant et arrière opposés 24, 26 est sensiblement égale à la distance séparant la paroi avant du boîtier 34 et la deuxième paroi 58 du support 52, de sorte que le récipient 1 s'étende sensiblement depuis la paroi avant 34 jusqu'à la paroi qui lui est opposée (deuxième paroi 58 par exemple ou paroi arrière 36).

Lorsque la longueur L2 et la largeur L1 du récipient 1 respectent ces conditions simultanément, les quatre rebords supérieurs 24, 26, 28, 30 du récipient 1 s'étendent chacun sensiblement depuis la cavité du récipient jusqu'à l'une des parois définissant la chambre 60 où est reçue le récipient 1 : le rebord supérieur avant 24 s'étend jusqu'à la paroi avant 34, le rebord arrière 26 s'étend jusqu'à la deuxième paroi 58, le rebord latéral 28 s'étend jusqu'à la paroi latérale 38 du boîtier 32, et l'autre rebord latéral 28 s'étend jusqu'à la première paroi 56 du support 52. Autrement dit, les dimensions du récipient 1 coïncident sensiblement avec les dimensions de la chambre 60.

**Revendications**

1. Dispositif de suivi de la consommation d'aliments par un animal tel qu'un mammifère, par exemple un chat, le dispositif comprenant :

   • une paroi avant (34), une paroi arrière (58) et deux parois latérales (38, 56) définissant entre elles une chambre (60), et une fenêtre (46) formée dans la paroi avant (34) pour permettre à un animal d'accéder à la chambre (60) depuis l'extérieur du dispositif de suivi,
   • un récipient (1) agencé dans la chambre (60) entre les parois (34, 58, 38, 56), le récipient (1) définissant une cavité (2) pour stocker des aliments destinés à être prélevés par l'animal,
   • un élément de récupération d'aliments (16, 18, 20, 22, 65a, 65b) agencé dans la chambre (60) entre la cavité (2) du récipient (1) et l'une des parois (34, 58, 38, 56) pour récupérer des aliments sortis de la cavité et non consommés par l'animal, dans lequel l'élément de récupération (20, 65a) d'aliments s'étend sensiblement depuis la cavité du récipient jusqu'à une des parois (34, 58, 38, 56),
   • un système de pesée (64) configuré pour déterminer un poids d'aliments qui ont été prélevés dans la cavité (2) et qui n'ont été récupérés ni par la cavité (2) ni par l'élément de récupération (16, 18, 20, 22, 65a, 65b) du dispositif de suivi au cours d'une période de temps, le système de pesée comprenant une balance (66) agencée dans la chambre et configurée pour acquérir des mesures indicatives du poids cumulé du récipient (1) définissant la cavité (2) et d'aliments portés par le récipient (1).

2. Dispositif selon la revendication précédente, dans lequel la paroi jusqu'à laquelle s'étend l'élément de récupération est une première des parois latérales (38).

3. Dispositif selon la revendication 2, comprenant un deuxième élément de récupération (22, 65b) d'aliments s'étendant depuis la cavité du récipient jusqu'à une deuxième (56) des parois (56), dans lequel le récipient (1) est agencé entre la première paroi (38) et la deuxième paroi (56).

4. Dispositif selon la revendication précédente, dans lequel :

• le récipient présente deux bords opposés (28, 30), et le récipient présente une largeur mesurée entre ses deux bords opposés qui est sensiblement égale à une distance séparant les première et deuxième parois (38, 56), de sorte que le récipient (1) s'étende sensiblement depuis la première paroi (38) jusqu'à la deuxième paroi (56),

• le premier élément (20) et le deuxième élément (22) de récupération forment deux rebords supérieurs du récipient (1) s'étendant chacun depuis la cavité (2) jusqu'à l'un des bords (28, 30).

5. Dispositif selon la revendication précédente, comprenant des joints d'étanchéité flexible reliant respectivement les bords opposés (28, 30) du récipient (1) aux première et deuxième parois (38, 56).

6. Dispositif selon l'une des revendications 1 à 3, comprenant un premier élément de récupération d'aliments comprenant un deuxième récipient (65a) pesable indépendamment du récipient (1) définissant la cavité (2), et dans lequel le système de pesée (64) comprend en outre :

une deuxième balance (67a) configurée pour acquérir des mesures indicatives du poids du deuxième récipient et d'aliments récupérés par le deuxième récipient (65a),
une unité de traitement (72) configurée pour déterminer le poids des aliments qui ont été prélevés dans le récipient (1) et qui n'ont pas été récupérés par lesdits éléments de récupération au cours de la période de temps, à partir des mesures acquises par la première balance (64) et des mesures acquises par la deuxième balance (65a).

7. Dispositif selon la revendication précédente, dans lequel le récipient (1) définissant la cavité (2) comprend un premier rebord supérieur (20) s'étendant depuis la cavité vers l'une des parois de manière à surplomber le deuxième récipient (65a).

8. Dispositif selon l'une des revendications 6 à 7, comprenant un deuxième élément de récupération d'aliments comprenant un troisième récipient (65b) pesable indépendamment du récipient (1) définissant la cavité (2) et du deuxième récipient (65a), et dans lequel

• le système de pesée comprend une troisième balance (67b) configurée pour acquérir au moins une mesure indicative du poids du troisième récipient (65b) et d'aliments récupérés par le troisième récipient (65b),
• l'unité de traitement (72) est configurée pour calculer le poids des aliments qui ont été prélevés dans le récipient (1) et qui n'ont pas été récupérés par lesdits éléments de récupération au cours de la période de temps, à partir des mesures acquises par les première, deuxième et troisième balances (64, 67a, 67b).

9. Dispositif selon la revendication 8 dans sa dépendance à la revendication 7, dans lequel le récipient (1) définissant la cavité (2) comprend un deuxième rebord supérieur (22) s'étendant depuis la cavité (2) vers une autre des parois de manière à surplomber le troisième récipient (65b), la cavité (2) étant ménagée entre les premier et deuxième rebords supérieurs (20, 22).

10. Dispositif selon l'une des revendications précédentes, dans lequel le système de pesée (64) comprend une balance (66) et un filtre à réponse impulsionnelle infinie (70) configuré pour éliminer ou non une mesure acquise par la balance (66) en fonction d'une mesure de poids précédemment acquise par la même balance (66).

11. Dispositif selon l'une des revendications précédentes, comprenant un toit présentant une forme convexe et/ou inclinée pour empêcher un animal de stationner sur le toit lorsque le dispositif est posé sur un sol.

12. Dispositif selon l'une des revendications précédentes, dans lequel la paroi avant (34) est au moins en partie transparente.

13. Dispositif selon l'une des revendications précédentes, comprenant des moyens de détection (76) configurés pour détecter l'entrée et la sortie d'un animal dans la chambre (60) via la fenêtre (46), et dans lequel le système de pesée (64) est configuré pour que la période de temps débute lorsque les moyens de détection (76) détectent l'entrée de l'animal dans la chambre et se termine lorsque les moyens de détection (76) détectent une sortie de l'animal hors de la chambre.

14. Dispositif selon la revendication précédente, dans lequel les moyens de détection (76) comprennent un émetteur de faisceau infrarouge, et un récepteur agencé pour recevoir le faisceau infrarouge émis par l'émetteur, l'émetteur étant agencé pour que le faisceau soit interrompu par un animal accédant à la chambre (60) via la fenêtre (46).

15. Dispositif selon l'une des revendications 13 à 14, comprenant en outre un lecteur de radio-identification (78) adapté pour recevoir d'une radio-étiquette portée par un animal accédant à la chambre (60) via la fenêtre (46) des données permettant d'identifier cet animal dans une base de données (82) d'individus.

**Patentansprüche**

1. Vorrichtung zum Verfolgen der Futteraufnahme eines Tieres wie ein Säugetier, zum Beispiel eine Katze, wobei die Vorrichtung umfasst:

   • eine vordere Wand (34), eine hintere Wand (58) und zwei Seitenwände (38, 56), die zwischen sich eine Kammer (60) definieren, und ein Fenster (46), das in der vorderen Wand (34) ausgebildet ist, um es einem Tier zu erlauben, von außerhalb der Verfolgungsvorrichtung auf die Kammer (60) zuzugreifen,
   • einen Behälter (1), der in der Kammer (60) zwischen den Wänden (34, 58, 38, 56) eingerichtet ist, wobei der Behälter (1) einen Hohlraum (2) zum Lagern des Futters definiert, das dazu bestimmt ist, von dem Tier entnommen zu werden,
   • ein Futter-Rückgewinnungselement (16, 18, 20, 22, 65a, 65b), das in der Kammer (60) zwischen dem Hohlraum (2) des Behälters (1) und einer der Wände (34, 58, 38, 56) eingerichtet ist, um Futter zurückzugewinnen, das aus dem Hohlraum ausgetreten ist und nicht von dem Tier aufgenommen wurde, wobei sich das Futter-Rückgewinnungselement (20, 65a) etwa ab dem Hohlraum des Behälters bis zu einer der Wände (34, 58, 38, 56) erstreckt,
   • ein Wiegesystem (64), das ausgelegt ist, um ein Gewicht des Futters zu bestimmen, das aus dem Hohlraum (2) entnommen und das weder vom Hohlraum (2) noch vom Rückgewinnungselement (16, 18, 20, 22, 65a, 65b) der Verfolgungsvorrichtung während eines Zeitraums zurückgewonnen wurde, wobei das Wiegesystem eine Waage (66) umfasst, die in der Kammer eingerichtet und ausgelegt ist, um annähernde Messungen des kumulativen Gewichts des Behälters (1), der den Hohlraum (2) definiert, und des von dem Behälter (1) getragenen Futters zu erfassen.

2. Vorrichtung nach vorangehendem Anspruch, wobei die Wand, bis zu der sich das Rückgewinnungselement erstreckt, eine erste der Seitenwände (38) ist.

3. Vorrichtung nach Anspruch 2, die eine zweites Futter-Rückgewinnungselement (22, 65b) umfasst, das sich ab dem Hohlraum des Behälters bis zu einer zweiten (56) der Wände (56) erstreckt, wobei der Behälter (1) zwischen der ersten Wand (38) und der zweiten Wand (56) eingerichtet ist.

4. Vorrichtung nach vorangehendem Anspruch, wobei:

   • der Behälter zwei gegenüberliegende Ränder (28, 30) aufweist und der Behälter eine Breite, gemessen zwischen seinen zwei gegenüberliegenden Rändern, aufweist, die etwa gleich einem Abstand ist, der die erste und zweite Wand (38, 56) trennt, so dass sich der Behälter (1) etwa ab der ersten Wand (38) bis zur zweiten Wand (56) erstreckt,
   • das erste Element (20) und das zweite Element (22) zur Rückgewinnung zwei obere Kanten des Behälters (1) bilden, die sich jeweils ab dem Hohlraum (2) bis zu einem der Ränder (28, 30) erstrecken.

5. Vorrichtung nach vorangehendem Anspruch, die flexible Dichtungen umfasst, die jeweils die gegenüberliegenden Ränder (28, 30) des Behälters (1) mit der ersten und zweiten Wand (38, 56) verbinden.

6. Vorrichtung nach einem der Ansprüche 1 bis 3, die ein erstes Futter-Rückgewinnungselement umfasst, das einen zweiten Behälter (65a) umfasst, der unabhängig vom Behälter (1) wiegbar ist, der den Hohlraum (2) definiert, und wobei das Wiegesystem (64) ferner umfasst:

   eine zweite Waage (67a), die ausgelegt ist, um annähernde Messungen des Gewichts des zweiten Behälters und des von dem zweiten Behälter (65a) zurückgewonnenen Futters zu erfassen,
   eine Verarbeitungseinheit (72), die ausgelegt ist, um das Gewicht des Futters, das aus dem Behälter (1) entnommen wurde und das nicht von den Rückgewinnungselementen während des Zeitraums zurückgewonnen wurde, ausgehend von den von der ersten Waage (64) erfassten Messungen und den von der zweiten Waage (65a) erfassten Messungen zu bestimmen.

7. Vorrichtung nach vorangehendem Anspruch, wobei der Behälter (1), der den Hohlraum (2) definiert, eine erste obere Kante (20) definiert, die sich ab dem Hohlraum zu einer der Wände derart erstreckt, dass sie über dem zweiten Behälter (65a) liegt.

8. Vorrichtung nach einem der Ansprüche 6 bis 7, die ein zweites Futter-Rückgewinnungselement umfasst, das einen dritten Behälter (65b) umfasst, der unabhängig von dem Behälter (1) wiegbar ist, der den Hohlraum (2) definiert, und vom zweiten Behälter (65a), und wobei

   • das Wiegesystem eine dritte Waage (67b) umfasst, die ausgelegt ist, um mindestens eine annähernde Messung des Gewichts des dritten Behälters (65b) und des von dem dritten Behälter (65b) zurückgewonnenen Futters zu erfassen,

• die Verarbeitungseinheit (72) ausgelegt ist, um das Gewicht des Futters, das aus dem Behälter (1) entnommen und das nicht von den Rückgewinnungselementen während des Zeitraums zurückgewonnen wurde, ausgehend von den Messungen, die von der ersten, zweiten und dritten Waage (64, 67a, 67b) erfasst wurden, zu berechnen.

9. Vorrichtung nach Anspruch 8 in seiner Abhängigkeit von Anspruch 7, wobei der Behälter (1), der den Hohlraum (2) definiert, eine zweite obere Kante (22) definiert, die sich ab dem Hohlraum (2) zu einer anderen der Wände derart erstreckt, dass sie über dem dritten Behälter (65b) liegt, wobei der Hohlraum (2) zwischen der ersten und zweiten oberen Kante (20, 22) eingerichtet ist.

10. Vorrichtung nach einem der vorangehenden Ansprüche, wobei das Wiegesystem (64) eine Waage (66) und einen Filter mit unendlicher Impulsantwort (70) umfasst, der ausgelegt ist, um eine von der Waage (66) erfasste Messung in Abhängigkeit von einer vorherigen Gewichtsmessung, die von derselben Waage (66) erfasst wurde, auszuschließen oder nicht.

11. Vorrichtung nach einem der vorangehenden Ansprüche, die ein Dach umfasst, das eine konvexe und/oder geneigte Form aufweist, um zu vermeiden, dass sich ein Tier auf dem Dach aufhält, wenn die Vorrichtung auf dem Boden abgestellt ist.

12. Vorrichtung nach einem der vorangehenden Ansprüche, wobei die vordere Wand (34) mindestens teilweise transparent ist.

13. Vorrichtung nach einem der vorangehenden Ansprüche, die Detektionsmittel (76) umfasst, die ausgelegt sind, um das Hineingehen eines Tieres in und sein Herausgehen aus der Kammer (60) über das Fenster (46) zu ermitteln, und wobei das Wiegesystem (64) ausgelegt ist, damit der Zeitraum beginnt, wenn die Detektionsmittel (76) das Hineingehen des Tieres in die Kammer ermitteln und endet, wenn die Detektionsmittel (76) das Herausgehen des Tieres aus der Kammer ermitteln.

14. Vorrichtung nach vorangehendem Anspruch, wobei die Detektionsmittel (76) einen Infrarotstrahlensender und einen Empfänger umfassen, der eingerichtet ist, um den von dem Sender gesendeten Infrarotstrahl zu empfangen, wobei der Sender eingerichtet ist, damit der Strahl von einem Tier unterbrochen wird, das in die Kammer (60) über das Fenster (46) eintritt.

15. Vorrichtung nach einem der Ansprüche 13 bis 14, die ferner ein Funkidentifikationslesegerät (78) umfasst, das zum Empfang von einem Funketikett, das von einem Tier getragen wird, das über das Fenster (46) in die Kammer (60) eintritt, von Daten geeignet ist, die es erlauben, dieses Tier in einer Datenbank (82) von Individuen zu identifizieren.

**Claims**

1. A device for monitoring food consumption by an animal such as a mammal, for example a cat, the device comprising:

    • a front wall (34), a back wall (58) and two side walls (38, 56) defining a chamber (60) therebetween, and a window (46) formed in the front wall (34) to allow an animal to access the chamber (60) from outside the tracking device,
    • a container (1) arranged in the chamber (60) between the walls (34, 58, 38, 56), the container (1) defining a cavity (2) for storing food to be taken by the animal,
    • a food recovery member (16, 18, 20, 22, 65a, 65b) arranged in the chamber (60) between the cavity (2) of the container (1) and one of the walls (34, 58, 38, 56) for recovering food taken out of the cavity and not consumed by the animal, wherein the food recovery member (20, 65a) extends substantially from the cavity of the container to one of the walls (34, 58, 38, 56)
    • a weighing system (64) configured to determine a weight of food that has been removed from the cavity (2) and that has not been retrieved by either the cavity (2) or the retrieval element (16, 18, 20, 22, 65a, 65b) of the tracking device over a period of time, the weighing system comprising a scale (66) arranged in the chamber and configured to acquire measurements indicative of the cumulative weight of the container (1) defining the cavity (2) and of food carried by the container (1).

2. The device of the preceding claim, wherein the wall to which the recovery element extends is a first of the side walls (38).

3. The device according to claim 2, comprising a second food collection element (22, 65b) extending from the cavity of the container to a second (56) of the walls (56), wherein the container (1) is arranged between the first wall (38) and the second wall (56).

4. The device of the preceding claim, wherein:

    • the container has two opposite edges (28, 30), and the container has a width measured between its two opposite edges that is substantially equal to a distance between the first and second walls (38, 56), such that the container (1) extends substantially from the first wall (38) to the second wall (56),
• the first (20) and second (22) collection elements form two upper rims of the container (1) each extending from the cavity (2) to one of the edges (28, 30).

5. The device according to the preceding claim, comprising flexible seals respectively connecting the opposite edges (28, 30) of the container (1) to the first and second walls (38, 56).

6. The device according to any of claims 1 to 3, comprising a first food recovery element comprising a second container (65a) weighable independently of the container (1) defining the cavity (2), and wherein the weighing system (64) further comprises:

   a second scale (67a) configured to acquire measurements indicative of the weight of the second container and of food recovered by the second container (65a),
   a processing unit (72) configured to determine the weight of the food that has been taken from the container (1) and not recovered by said recovery elements during the time period,
   from the measurements acquired by the first scale (64) and the measurements acquired by the second scale (65a).

7. The device of the preceding claim, wherein the container (1) defining the cavity (2) includes a first upper rim (20) extending from the cavity to one of the walls so as to overhang the second container (65a).

8. A device according to any of claims 6 to 7, comprising a second food recovery member comprising a third container (65b) weighable independently of the container (1) defining the cavity (2) and the second container (65a), and wherein

   • the weighing system includes a third scale (67b) configured to acquire at least one measurement indicative of the weight of the third container (65b) and of food recovered by the third container (65b),
   • the processing unit (72) is configured to calculate the weight of the food that has been taken from the container (1) and that has not been recovered by said recovery elements during the time period, from the measurements acquired by the first, second and third scales (64, 67a, 67b).

9. The device of claim 8 in dependence on claim 7, wherein the container (1) defining the cavity (2) includes a second upper rim (22) extending from the cavity (2) to another of the walls so as to overhang the third container (65b), the cavity (2) being provided between the first and second upper rims (20, 22).

10. The device of any of the preceding claims, wherein the weighing system (64) comprises a scale (66) and an infinite impulse response filter (70) configured to eliminate or not eliminate a measurement acquired by the scale (66) based on a weight measurement previously acquired by the same scale (66).

11. The device according to any of the preceding claims, comprising a roof having a convex and/or sloping shape to prevent an animal from parking on the roof when the device is placed on a floor.

12. The device of any of the preceding claims, wherein the front wall (34) is at least partially transparent.

13. An apparatus according to any of the preceding claims, comprising sensing means (76) configured to sense the entry and exit of an animal into the chamber (60) via the window (46), and wherein the weighing system (64) is configured such that the time period begins when the sensing means (76) senses entry of the animal into the chamber and ends when the sensing means (76) senses an exit of the animal from the chamber.

14. A device according to the preceding claim, wherein the detection means (76) comprises an infrared beam emitter, and a receiver arranged to receive the infrared beam emitted by the emitter, the emitter being arranged for the beam to be interrupted by an animal accessing the chamber (60) via the window (46).

15. The device of any of claims 13 to 14, further comprising a radio identification reader (78) adapted to receive from a radio tag worn by an animal accessing the chamber (60) via the window (46) data identifying that animal in a database (82) of individuals.

## FIG. 1

## FIG. 2

## FIG. 3

FIG. 4

**FIG. 5**

**FIG. 6**

50

38

EP 3 780 951 B1

**FIG. 7**

# FIG. 8

# FIG. 9

# FIG. 10

**RÉFÉRENCES CITÉES DANS LA DESCRIPTION**

**Documents brevets cités dans la description**

- WO 2017214698 A
- WO 2013182624 A
- WO 2012046124 A